# EUROPÄISCHE PATENTSCHRIFT

(11) **EP 3 928 174 B1**
(45) Veröffentlichungstag und Bekanntmachung des Hinweises auf die Patenterteilung: **12.10.2022**
(21) Anmeldenummer: 20706463.5
(22) Anmeldetag: 20.02.2020
(51) Int. Cl.: G05D 1/06

(54) **VERFAHREN ZUM LANDEN EINES LUFTFAHRZEUGS AUF EINEM WASSERFAHRZEUG**
METHOD FOR LANDING AN AIRCRAFT ON A WATERCRAFT
PROCÉDÉ D'ATTERRISSAGE D'UN AÉRONEF SUR UN VÉHICULE AQUATIQUE

(30) Priorität: 22.02.2019 DE 102019202411
(43) Veröffentlichungstag der Anmeldung: 29.12.2021
(73) Patentinhaber: thyssenkrupp Marine Systems GmbH, 24143 Kiel (DE); thyssenkrupp AG, 45143 Essen (DE)
(72) Erfinder: EBELING, Bastian, 25495 Kummerfeld (DE); POPALL, Christian, 25479 Ellerau (DE)
(74) Vertreter: thyssenkrupp Intellectual Property GmbH
(86) Internationale Anmeldenummer: PCT/EP2020/054440
(87) Internationale Veröffentlichungsnummer: WO 2020/169712

(56) Entgegenhaltungen:
- EP-A2- 2 009 534
- CN-B- 106 494 632
- US-A1- 2014 350 754
- US-A1- 2017 261 975
- US-A1- 2018 308 365

## Beschreibung

Die Erfindung betrifft ein Verfahren zum Landen eines Luftfahrzeugs, insbesondere eines autonomen unbemannten Luftfahrzeugs, auf einem Wasserfahrzeug.

Das Landen eines Luftfahrzeugs auf ein Wasserfahrzeug ist durch die Eigenbewegung des Wasserfahrzeugs gegenüber einer Landung an Land deutlich erschwert. Durch Wellengang kommt es zu Höhenänderungen der Landeplattform, auf welcher ein Luftfahrzeug landen soll. Ebenso kommt es auch durch Rollbewegungen und Nickbewegungen zu einer Änderung der Lage der Landeplattform. Hierdurch ist das Risiko einer Kollision bei der Landung eines Luftfahrzeugs auf ein Wasserfahrzeug erhöht.

Je kleiner ein Luftfahrzeug ist, desto anfälliger wird dieses Luftbewegungen aber auch für Kollisionen mit der Landeplattform, da es durch eine Kollision leichter beschädigt oder vom Kurs abgebracht werden kann. Zunehmend werden autonome unbemannte Luftfahrzeuge oder ferngesteuerte unbemannten Fahrzeuge eingesetzt. Diese sind vergleichsweise leicht insbesondere im Vergleich zu Hubschraubern.

Aus der US 9,429,953 B1 ist ein autonomes Landesverfahren mittels GPS bekannt.

Aus der US 2016/0122038 A1 ein Landesystem mit einer Landeplattform mit optischen Markern bekannt.

Aus der US 2014 0350754 A1 ist ein Verfahren zur Erzeugung eines Landungsvektors zum Landen eines Luftfahrzeugs auf dem Deck eines Schiffes bekannt, wobei Wind und Schiffsbewegung erfasst werden.

Aus der US 2017 / 0261975 A1 ist ein Verfahren zur Verwendung codierten Lichts zum Landen eines unbemannten Luftfahrzeuges bekannt.

Oftmals ist es jedoch notwendig, dass das Luftfahrzeug spezielle Voraussetzungen aufweisen muss, um kooperativ mit einem Wasserfahrzeug zusammen zu arbeiten.

Beispielsweise müssen geeignete Datenübertragungen vorgesehen sein, was jedoch auf verschiedenen Wasserfahrzeugen verschiedene Standards sein können.

Aufgabe der Erfindung ist es, ein Verfahren bereitzustellen ein Luftfahrzeug sich auf einem Wasserfahrzeug zu landen, wobei vorzugsweise jedes beliebige unmodifizierte Luftfahrzeug verwendet werden kann.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren dient zum Landen eines Luftfahrzeugs auf einem Wasserfahrzeug. Es wird hierzu ein Wasserfahrzeug mit wenigstens einem ersten Sensor, einem zweiten Sensor, einem dritten Sensor und wenigstens einem ersten Bewegungssensor ausgewählt. Als erster Sensor, zweiter Sensor und dritter Sensor werden Sensoren zur Positionsbestimmung eines Luftfahrzeuges ausgewählt. Das Verfahren weist die folgenden Schritte auf:
a) Bestimmen der Eigenbewegung des Wasserfahrzeuges mit dem ersten Bewegungssensor,
b) Bestimmen der Position des Luftfahrzeugs mithilfe des ersten Sensors, des zweiten Sensors und des dritten Sensors,
c) Vorhersage der zukünftigen Eigenbewegung des Wasserfahrzeugs,
d) Bestimmen einer Annährungsroute für das Luftfahrzeug unter Berücksichtigung der vorhergesagten zukünftigen Eigenbewegung des Wasserfahrzeugs,
e) Übertragung der Daten der Annährungsroute an das Luftfahrzeug.

Kern des Verfahrens ist die Vorhersage der zukünftigen Eigenbewegung des Wasserfahrzeugs in Schritt c). Diese Vorhersage umfasst insbesondere Rollbewegungen und Nickbewegungen. Durch diese Vorhersage verringert sich die Gefahr einer Kollision zwischen dem Wasserfahrzeug und dem Luftfahrzeug durch eine plötzliche Bewegung des Wasserfahrzeugs.

Die Daten der Annährungsroute in Schritt e) können konkrete Vektordaten umfassen. Es kann sich hierbei jedoch auch lediglich um den optimalen Zeitpunkt der Landung handeln. Auch kann damit die zeitliche Entwicklung des relativen Abstands vom Luftfahrzeug zum Wasserfahrzeug gemeint sein, insbesondere bei stillstehendem beziehungsweise schwebendem Luftfahrzeug.

Durch die Bestimmung der Position des Luftfahrzeugs in Bezug zum Wasserfahrzeug mithilfe dreier lokaler Sensoren ist eine deutlich höhere Genauigkeit erreichbar, insbesondere im Vergleich satellitenbasierten Ortungssystemen, zum Beispiel GPS.

Erfindungsgemäß wird für die Datenübertragung in Schritt e) wenigstens ein erster Datenübertragungskanal ausgewählt, wobei als erster Datenübertragungskanal ein optischer Datenübertragungskanal ausgewählt wird. Erfindungsgemäß werden für den ersten optischen Datenübertragungskanal die Positionslampen des Wasserfahrzeugs verwendet. Erfindungsgemäß sind hier die Positionslampen des Landeplatzes für das Luftfahrzeug auf dem Wasserfahrzeug gemeint, nicht die für die Schifffahrt weiteren Positionslampen, welche beispielsweise Steuerbord und Backbord kennzeichnen. Die Verwendung eines optischen Datenübertragungskanals erhöht die Sicherheit insbesondere bei einer militärischen Anwendung. Ein optischer Datenübertragungskanal ist nur in der direkten Sichtlinie erkennbar, dadurch praktisch nicht abhörbar und hat eine verringerte Detektionsreichweite gegenüber Funkübertragungen. Des Weiteren ist die Reichweite begrenzt was ebenfalls ein Abhören oder Detektieren erschwert. Weiter verfügen praktisch alle Luftfahrzeuge, welche auf Wasserfahrzeugen gelandet werden sollen über eine Kamera zur optischen Erfassung. Daher ist der optische Datenübertragungskanal regelmäßig ohne weitergehende Modifikation des Luftfahrzeuges möglich. Die Verwendung der Positionslampen ist vorteilhaft, da diese sowieso vorhanden sein müssen.

In einer weiteren Ausführungsform der Erfindung wird als Luftfahrzeug ein unbemanntes Luftfahrzeug ausgewählt. Das erfindungsgemäße Verfahren ist besonders bevorzugt bei unbemannten Luftfahrzeugen anwendbar, da hier das Problem der sicheren Landung auf einem Wasserfahrzeug wesentlich erschwert ist. Während ein Pilot auch durch Übung und Erfahrung sehr viele Einflussgrößen wahrnimmt und berücksichtigt und somit vorausahnt, wann ein Aufsetzen sicher möglich ist, ist dieses in einem unbemannten Wasserfahrzeug sehr schwer umsetzbar. Gleichzeitig weisen praktisch alle unbemannten Luftfahrzeuge, die auf Wasserfahrzeugen gelandet werden, ein Kamerasystem auf. Es ist somit ohne weiteres möglich, ein handelsübliches unbemanntes Luftfahrzeug über einen optischen Datenübertragungskanal anzusprechen. Eine umfangreiche Integration zusätzlicher Bauteile ist somit entbehrlich.

In einer weiteren Ausführungsform der Erfindung wird zur Vorhersage der künftigen Eigenbewegung des Wasserfahrzeugs in Schritt c) neben der in Schritt a) bestimmten Eigenbewegung des Wasserfahrzeugs wenigstens eine weitere Information verwendet, wobei die weitere Information ausgewählte ist aus der Gruppe umfassend Wetterdaten, insbesondere Windgeschwindigkeit, Windrichtung, Wellenhöhe sowie Wellenabstand, Geschwindigkeit des Wasserfahrzeugs, Beschleunigung des Wasserfahrzeugs, Masse des Wasserfahrzeugs, Massenverteilung des Wasserfahrzeugs, Winkel zwischen der Ausbreitungsrichtung der Wellenfront und der Fahrtrichtung des Wasserfahrzeugs.

Zwar kann aus der mithilfe des ersten Bewegungssensors bestimmten Bewegung eine Vorhersage für die künftige Eigenbewegung des Wasserfahrzeugs erfolgen, eine deutliche Erhöhung ist jedoch möglich, sofern auf Erfahrungswerte zurückgegriffen werden kann, welche insbesondere die Wetterlage, insbesondere die Art der zu erwartenden Wellen, berücksichtigt. Daten wie Windgeschwindigkeit und Windrichtung sind vergleichsweise einfach bestimmbar und geben ein gutes Indiz für die Wellenbewegung ab. Genauere Daten zu Wellenhöhe oder Wellenabstand können zwar auch optisch und/oder aus dem Bewegungsdaten identifiziert werden, sind jedoch oftmals schwerer zu erfassen.

Auch die Wassertiefe, insbesondere die Veränderung der Wassertiefe, kann bei der Vorhersage der zukünftigen Eigenbewegung des Wasserfahrzeugs berücksichtigt werden.

In einer weiteren Ausführungsform der Erfindung wird in Schritt c) die zeitabhängige Neigung einer Fläche vorhergesagt, wobei die Fläche zur Aufnahme des Luftfahrzeugs ausgebildet ist. Die Fläche zur Aufnahme des Luftfahrzeugs, auch Landeplattform genannt, sollte beim Aufsetzen planparallel zum Luftfahrzeug sein. Daher ist neben der Höheninformation auch die Neigung sehr hilfreich.

In einer weiteren Ausführungsform der Erfindung wird in Schritt b) auch die Orientierung des Luftfahrzeugs relativ zum Wasserfahrzeug bestimmt. Um ein planparalleles Aufsetzen des Luftfahrzeugs auf dem Wasserfahrzeug zu ermöglichen wird besonders bevorzugt sowohl die Neigung der Fläche zur Aufnahme des Luftfahrzeugs vorhergesagt als auch die Orientierung des Luftfahrzeugs bestimmt. Insbesondere kann auch eine Kopplungsvorrichtung vorgesehen sein, welche eine Kopplung zwischen dem Luftfahrzeug und dem Wasserfahrzeug herstellt. Hierzu findet eine Kopplung zwischen dem Wasserfahrzeug und dem Luftfahrzeug statt, insbesondere während das Luftfahrzeug in der Luft ist. Über die Kopplungsvorrichtung kann das in der Luft befindliche Luftfahrzeug auf das Wasserfahrzeug gezogen werden. Das Bestimmen der Neigung der Fläche kann in dieser Ausführungsform die Ausrichtung der Kopplungsvorrichtung bestimmen und den optimalen Zeitpunkt zur Betätigung der Kopplungsvorrichtung umfassen, zu dem eine Kopplung zwischen den beiden Fahrzeugen sicher möglich ist. Die Kopplungsvorrichtung kann eine starre oder eine flexible Kopplung herstellen. Beispiel für eine starre Kopplung ist eine Kopplung über einen Greifarm. Beispiel für eine flexible Kopplung ist eine Kopplung über ein Seil.

In einer bevorzugten Weiterbildung der Ausführungsform der Erfindung wird für die Datenübertragung in Schritt e) ein zweiter Datenübertragungskanal ausgewählt, wobei der zweite Datenübertragungskanal auf Basis an sich bekannter Funkübertragungstechnik die Daten überträgt. Zwischen Schritt d) und e) wird dann einer der beiden Datenübertragungskanäle ausgewählt und die Daten über den ausgewählten Kanal übertragen. Alternativ oder zusätzlich wird in Schritt e) zwischen dem ersten Datenübertragungskanal und dem zweiten Datenübertragungskanal beispielsweise in Abhängigkeit von Datenübertragungsraten entschieden. Alternativ oder zusätzlich werden in Schritt e) Daten über den ersten Datenübertragungskanal und den zweiten Datenübertragungskanal übertragen. Diese Weiterbildung hat den einen Vorteil, dass in Situationen in denen ein Abhören oder Detektieren unkritischen ist ein schnellerer und sicherer Übertragungskanal zur Verfügung steht. Ein weiterer Vorteil ist in der Redundanz der Verbindung bei Ausfall eines Datenübertragungskanals zu sehen.

In einer weiteren Ausführungsform der Erfindung umfasst die Datenübertragung in Schritt e) Steuerdaten für das Luftfahrzeug. Insbesondere bei der Verwendung eines autonomen unbemannten Luftfahrzeugs kann die Steuerung vollständig vom Wasserfahrzeug übernommen werden. Diese Fernsteuerung hat den Vorteil, dass auf die üblicherweise deutlich größeren Rechnerressourcen des Wasserfahrzeugs zurückgegriffen werden kann.

In einer weiteren Ausführungsform der Erfindung werden als erster Sensor, zweiter Sensor und dritter Sensor Ultraschallsensoren oder Radarsensoren ausgewählt. Ultraschallsensoren werden sehr verbreitet für die präzise Ortung im Nahbereich verwendet und sind somit gut verfügbar. Auch im Bereich der Radarsensoren sind für den Nahbereich und somit vergleichsweise hoher Auflösung bei gleichzeitig geringer Sendeleistung verfügbar.

In einer weiteren Ausführungsform der Erfindung kommunizieren der erste Sensor, der zweite Sensor, der dritte Sensor und der erste Bewegungssensor drahtlos mit dem Luftfahrzeug, das heißt diese übertragen ihre Daten direkt an das Luftfahrzeug und im Anschluss an die Übertragung erfolgt die Vorhersage der Eigenbewegung des Wasserfahrzeugs und die Bestimmung der Annährungsroute innerhalb des Luftfahrzeugs.

In einer weiteren Ausführungsform der Erfindung ist ein fünfter Sensor unterhalb der Position innerhalb des Wasserfahrzeugs angeordnet, auf welcher das Luftfahrzeug landen soll.

Nachfolgend ist das erfindungsgemäße Verfahren anhand eines in den Zeichnungen dargestellten Ausführungsbeispiels näher erläutert.
Fig. 1 Wasserfahrzeug bei ruhiger See
Fig. 2 Wasserfahrzeug bei Wellengang
Fig. 3 Landeplattform mit Luftfahrzeug von oben betrachtet
Fig. 4 Verfahrensablauf

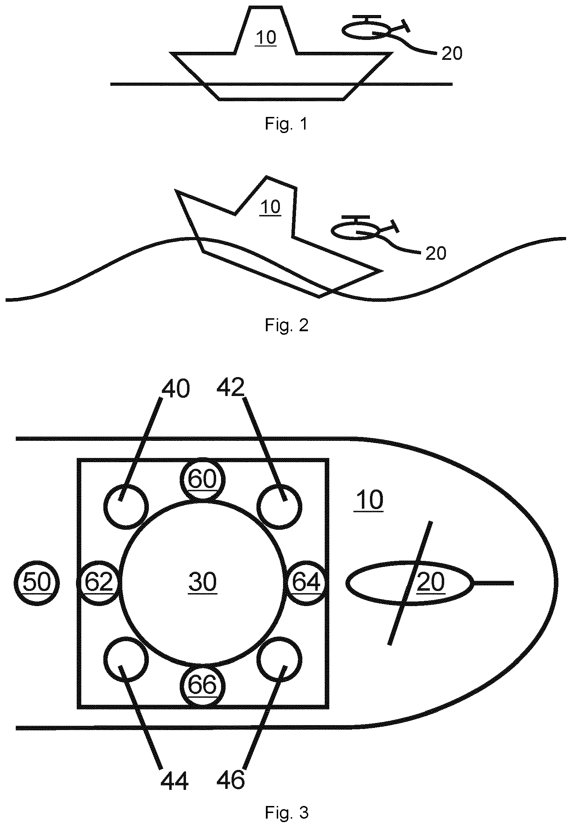

Fig. 1 zeigt ein Wasserfahrzeug 10 und ein sich dem Wasserfahrzeug 10 näherndes Luftfahrzeug 20 bei ruhiger See. Kommt nun Wellengang dazu, so ist die Orientierung des Luftfahrzeugs 20 im Verhältnis zum Wasserfahrzeug 10 deutlich schwieriger, wie es in Fig. 2 zur Verdeutlichung nicht maßstabsgerecht dargestellt ist.

In Fig. 3 ist der Blick von oben auf das Heck des Wasserfahrzeugs 10 mit der Landeplattform 30 zu sehen. Das Luftfahrzeug 20 nähert sich der Landeplattform 30, um auf dem Wasserfahrzeug 10 zu landen. Das Wasserfahrzeug 10 weist einen Bewegungssensor 50 auf, welcher die Schiffsbewegungen erfasst. Um die Landeplattform 30 sind ein erster Sensor 40, ein zweiter Sensor 42, ein dritter Sensor 44 und ein vierter Sensor 46 angeordnet. Der erste Sensor 40, der zweite Sensor 42, der dritte Sensor 44 und der vierte Sensor 46 dienen der Erfassung der Position und Orientierung des Luftfahrzeugs 20 relativ zum Wasserfahrzeug 10 mit hoher örtliche Auflösung. Rund um die Landeplattform 30 sind Positionslampen 60, 62, 64, 66 angeordnet, mit denen beispielsweise einem Piloten eines Helikopters die Landeplattform 30 markiert wird. Diese Positionslampen 60, 62, 64, 66 können zum Beispiel in der Helligkeit modifiziert werden, um so optisch Daten auf das Luftfahrzeug 20, insbesondere ein unbemanntes Luftfahrzeug, zu übertragen.

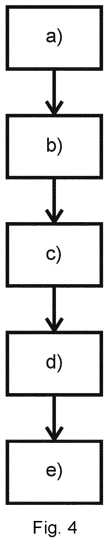

Fig. 4 zeigt ein Ablaufdiagramm des Verfahrens. Das Verfahren weist die folgenden Schritte auf:
a) Bestimmen der Eigenbewegung des Wasserfahrzeuges mit dem ersten Bewegungssensor,
b) Bestimmen der Position des Luftfahrzeugs mithilfe des ersten Sensors, des zweiten Sensors und des dritten Sensors,
c) Vorhersage der zukünftigen Eigenbewegung des Wasserfahrzeugs,
d) Bestimmen einer Annährungsroute für das Luftfahrzeug unter Berücksichtigung der vorhergesagten zukünftigen Eigenbewegung des Wasserfahrzeugs,
e) Übertragung der Daten der Annährungsroute an das Luftfahrzeug.

### Bezugszeichen

- 10: Wasserfahrzeug
- 20: Luftfahrzeug
- 30: Landeplattform
- 40: erster Sensor
- 42: zweiter Sensor
- 44: dritter Sensor
- 46: vierter Sensor
- 50: Bewegungssensor
- 60: Positionslampe
- 62: Positionslampe
- 64: Positionslampe
- 66: Positionslampe

## Patentansprüche

1. Verfahren zum Landen eines Luftfahrzeugs (20) auf einem Wasserfahrzeug (10), wobei ein Wasserfahrzeug (10) mit wenigstens einem ersten Sensor (40), einem zweiten Sensor (42), einem dritten Sensor (44) und wenigstens einem ersten Bewegungssensor (50) ausgewählt wird, wobei als erster Sensor (40), zweiter Sensor (42) und dritter Sensor (44) Sensoren zur Positionsbestimmung eines Luftfahrzeuges ausgewählt werden, wobei das Verfahren die folgenden Schritte aufweist:
a) Bestimmen der Eigenbewegung des Wasserfahrzeuges (10) mit dem ersten Bewegungssensor (50),
b) Bestimmen der Position des Luftfahrzeugs (20) mithilfe des ersten Sensors (40), des zweiten Sensors (42) und des dritten Sensors (44),
c) Vorhersage der zukünftigen Eigenbewegung des Wasserfahrzeugs (10),
d) Bestimmen einer Annährungsroute für das Luftfahrzeug (20) unter Berücksichtigung der vorhergesagten zukünftigen Eigenbewegung des Wasserfahrzeugs (10),
e) Übertragung der Daten der Annährungsroute an das Luftfahrzeug (20), **dadurch gekennzeichnet, dass** für die Datenübertragung in Schritt e) wenigstens ein erster Datenübertragungskanal ausgewählt wird, wobei als erster Datenübertragungskanal ein optischer Datenübertragungskanal ausgewählt wird, wobei für den ersten optischen Datenübertragungskanal die Positionslampen (60, 62, 64, 66) des Wasserfahrzeugs (10) verwendet werden.

2. Verfahren nach Anspruch 1, **dadurch gekennzeichnet, dass** als Luftfahrzeug (20) ein unbemanntes Luftfahrzeug ausgewählt wird.

3. Verfahren nach einem der vorstehenden Ansprüche, **dadurch gekennzeichnet, dass** zur Vorhersage der künftigen Eigenbewegung des Wasserfahrzeugs (10) in Schritt c) neben der in Schritt a) bestimmten Eigenbewegung des Wasserfahrzeugs (10) wenigstens eine weitere Information verwendet wird, wobei die weitere Information ausgewählte ist aus der Gruppe umfassend Wetterdaten, insbesondere Windgeschwindigkeit, Windrichtung, Wellenhöhe sowie Wellenabstand, Geschwindigkeit des Wasserfahrzeugs (10), Beschleunigung des Wasserfahrzeugs (10), Masse des Wasserfahrzeugs (10), Massenverteilung des Wasserfahrzeugs (10), Winkel zwischen der Ausbreitungsrichtung der Wellenfront und der Fahrtrichtung des Wasserfahrzeugs (10).

4. Verfahren nach einem der vorstehenden Ansprüche, **dadurch gekennzeichnet, dass** in Schritt c) die zeitabhängige Neigung einer Fläche vorhergesagt wird, wobei die Fläche zur Aufnahme des Luftfahrzeugs (20) ausgebildet ist.

5. Verfahren nach einem der vorstehenden Ansprüche, **dadurch gekennzeichnet, dass** in Schritt b) auch die Orientierung des Luftfahrzeugs (20) relativ zum Wasserfahrzeug (10) bestimmt wird.

6. Verfahren nach einem der vorstehenden Ansprüche, **dadurch gekennzeichnet, dass** die Datenübertragung in Schritt e) Steuerdaten für das Luftfahrzeug (20) umfasst.

7. Verfahren nach einem der vorstehenden Ansprüche, **dadurch gekennzeichnet, dass** als erster Sensor (40), zweiter Sensor (42) und dritter Sensor (44) Ultraschallsensoren oder Radarsensoren ausgewählt werden.

## Claims

1. Method for landing an aircraft (20) on a watercraft (10), wherein a watercraft (10) having at least a first sensor (40), a second sensor (42), a third sensor (44) and at least a first motion sensor (50) is selected, sensors for determining the position of an aircraft being selected as the first sensor (40), the second sensor (42) and the third sensor (44), wherein the method comprises the following steps:
a) determining the movement of the watercraft (10) using the first motion sensor (50),
b) determining the position of the aircraft (20) by means of the first sensor (40), the second sensor (42) and the third sensor (44),
c) predicting the future movement of the watercraft (10),
d) determining an approach route for the aircraft (20) taking into account the predicted future movement of the watercraft (10),
e) transmitting the data of the approach route to the aircraft (20),
**characterized in that** at least a first data transmission channel is selected for the data transmission in step e), an optical data transmission channel being selected as the first data transmission channel, the position lamps (60, 62, 64, 66) of the watercraft (10) being used for the first optical data transmission channel.

2. Method according to Claim 1, **characterized in that** an unmanned aircraft is selected as the aircraft (20).

3. Method according to either of the preceding claims, **characterized in that** at least one further item of information is used to predict the future movement of the watercraft (10) in step c) in addition to the movement of the watercraft (10) determined in step a), the further item of information being selected from the group comprising weather data, in particular wind speed and wind direction, wave height and wave distance, speed of the watercraft (10), acceleration of the watercraft (10), mass of the watercraft (10), mass distribution of the watercraft (10), angle between the propagation direction of the wave front and the direction of travel of the watercraft (10).

4. Method according to one of the preceding claims, **characterized in that** the time-dependent tilting of a surface is predicted in step c), the surface being designed to receive the aircraft (20).

5. Method according to one of the preceding claims, **characterized in that** the orientation of the aircraft (20) relative to the watercraft (10) is also determined in step b).

6. Method according to one of the preceding claims, **characterized in that** the data transmission in step e) comprises control data for the aircraft (20).

7. Method according to one of the preceding claims, **characterized in that** ultrasonic sensors or radar sensors are selected as the first sensor (40), the second sensor (42) and the third sensor (44).

## Revendications

1. Procédé d'atterrissage d'un aéronef (20) sur un navire (10), un navire (10) comprenant au moins un premier capteur (40), un deuxième capteur (42), un troisième capteur (44) et au moins un premier capteur de mouvement (50) étant choisis, des capteurs destinés à déterminer la position d'un aéronef étant choisis comme premier capteur (40), deuxième capteur (42) et troisième capteur (44), le procédé comprenant les étapes suivantes :
a) déterminer le mouvement propre du navire (10) à l'aide du premier capteur de mouvement (50),
b) déterminer la position de l'aéronef (20) à l'aide du premier capteur (40), du deuxième capteur (42) et du troisième capteur (44),
c) prédire le mouvement propre futur du navire (10),
d) déterminer une route d'approche de l'aéronef (20) avec prise en compte du mouvement propre futur prédit du navire (10),
e) transmettre les données de la route d'approche à l'aéronef (20),
**caractérisé en ce qu'**au moins un premier canal de transmission de données est choisi pour la transmission de données à l'étape e), un canal de transmission de données optique étant choisi comme premier canal de transmission de données, les feux de position du navire (10) étant utilisés pour le premier canal de transmission de données optiques (60, 62, 64, 66).

2. Procédé selon la revendication 1, **caractérisé en ce qu'**un aéronef sans pilote est choisi comme aéronef (20) .

3. Procédé selon l'une des revendications précédentes, **caractérisé en ce qu'**au moins une information supplémentaire est utilisée pour prédire le mouvement propre futur du navire (10) à l'étape c), en plus du mouvement propre du navire (10) déterminé à l'étape a), l'information supplémentaire étant choisie dans le groupe comprenant des données météorologiques, en particulier la vitesse du vent, la direction du vent, la hauteur des vagues et l'espacement des vagues, la vitesse du navire (10), l'accélération du navire (10), la masse du navire (10), la répartition de la masse du navire (10), l'angle entre la direction de propagation des vagues et la direction de déplacement du navire (10).

4. Procédé selon l'une des revendications précédentes, **caractérisé en ce que** l'inclinaison d'une surface en fonction du temps est prédite à l'étape c), la surface étant conçue pour recevoir l'aéronef (20).

5. Procédé selon l'une des revendications précédentes, **caractérisé en ce que** l'orientation de l'aéronef (20) par rapport au navire (10) est également déterminée à l'étape b).

6. Procédé selon l'une des revendications précédentes, **caractérisé en ce que** la transmission de données à l'étape e) comprend des données de commande de l'aéronef (20).

7. Procédé selon l'une des revendications précédentes, **caractérisé en ce que** des capteurs à ultrasons ou des capteurs radar sont choisis comme premier capteur (40), deuxième capteur (42) et troisième capteur (44).
